# EUROPEAN PATENT APPLICATION

(11) **EP 3 138 679 A1**
(43) Date of publication of application: **08.03.2017**
(21) Application number: 16153761.8
(22) Date of filing: 02.02.2016
(51) Int. Cl.: B29C 47/54, B29C 47/66, B28B 3/00, B30B 11/26

(54) **POLYMER "CANE" EXTRUDER**

(30) Priority: 04.09.2015 US 201514845363
(71) Applicant: Troise, Karen, Richmond Hill, Georgia 31324 (US); Troise, Anthony M., Richmond Hill, Georgia 31324 (US)
(72) Inventor: Troise, Karen, Richmond Hill, Georgia 31324 (US); Troise, Anthony M., Richmond Hill, Georgia 31324 (US)
(74) Representative: Romano, Giuseppe

(57) **Abstract**

A polymer clay "cane" extruder that is comprised of a solid rod (18) and a hollow tube (16) that is made of acrylic. The tool is used for cutting polymer clay slices of various uniform and consistent shapes, which includes cylindrical, square, and triangular shapes. This tool gives uniform shape and size to each slice of polymer cane when compressed and extruded, which holds its shape and aids in cutting uniform slices of the clay "canes" with little to no distortion. It does not require any excessive force for cutting canes. A polymer clay "cane" extruder is very useful for making canes that are used in jewelry articles, such as beads, pendants, bracelets, and neckpieces and/or other arts and crafts related projects.

## Description

### FIELD OF THE INVENTION

The present invention relates to the art of forming shapes of polymer clay. In particular, the present invention relates to a tool and method for cutting polymer clay slices of various uniform and consistent shapes.

### BACKGROUND OF THE INVENTION

Polymer clay techniques have been widely used in art and craftsmanship for several years. As its name implies, polymer clay is a pliable and blend-able polymer compound. It is not true clay, as clay is fine silicate particles suspended in water, whereas polymer clay is fine polyvinyl chloride (PVC) suspended in plasticizer. However, polymer clay can be used much like clay. Polymer clay is versatile. It can be blended with dozens of colors, such as paints, to make the desired colors. Since the color is inherent in the particles, the artists or crafters can also work two or more colors together, without blending them, for special effects, such as cane working and marbling. The clay's pliability and ductility allow artists or crafters to use techniques from glasswork, textile arts, and sculpture. Furthermore, polymer clay doesn't dry out, so they can sculpt and form it without worrying about a time limit.

Artists or crafters can cover anything (as long as it won't melt or burn at the low firing temperatures) with a veneer of polymer clay: wooden boxes, picture frames, mirrors, and tableware. One popular application is jewelry. Polymer clay can be used to make beads, pendants, bracelets, and neckpieces. Small sculptures and buttons are other possibilities. Clay artists have developed techniques to give polymer clay the appearance of granite, jade, amber, coral, turquoise, and ivory. Its flexibility means that they can make pieces in shapes and sizes that wouldn't be possible with actual stone.

Polymer clay is a fantastic medium to use when making jewelry, and a great hobby for all ages. It is a man made, non-toxic craft material that is made of tiny particles of PVC (poly vinyl chloride), pigments, and a liquid plasticizer. Forming polymer clay jewelry has become a very popular craft or art form. Typically, such jewelry items are formed by hand, or sometimes by rolling with a makeshift device, such as cut plastic (PVC) pipe found only in round shapes. There is always a lack of uniformity and lack of precision forming in the beads that are produced by hand forming.

The present invention addresses the above described use of polymer clay for making jewelry and other arts and crafts articles by providing a tool that is needed for the purpose. As such, it may be appreciated that there continues to be a need for a new and improved clay extruder tool, as set forth by the present invention, which addresses the problems of ease of use as well as effectiveness in construction in providing the useful tool for polymer clay artists. In this respect, the present invention substantially fulfills this need.

### SUMMARY OF THE INVENTION

In view of the foregoing disadvantages inherent in the known types of the polymer clay arts now present in the prior art, the present invention provides a clay extruder tool for cutting uniform slices of polymer clay and a method of doing so. As such, the general purpose of the present invention, which will be described subsequently in greater detail, is to provide a new and improved polymer clay extruder that has all of the advantages of the prior art, and none of the disadvantages.

Accordingly, it is a primary objective of the present invention to provide a tool for cutting polymer clay slices of various uniform and consistent shapes.

In another aspect, the present invention provides a tool made from clear acrylic in various shapes.

It is yet another aspect of the present invention where the tool provides uniform pieces of polymer canes without applying any excessive force.

It is another objective of the present invention to provide polymer canes that can be combined to create sheets to make jewelry.

Additionally, the polymer canes can also be used to make other art projects with little to no distortion.

In further aspect, the tool is specifically designed for polymer clay artists, and can be used at home.

It is still another objective of the present invention to provide a new and improved polymer clay extruder tool that may be easily and efficiently manufactured and marketed.

It is a further aspect of the present invention to provide a new and improved polymer clay extruder tool that is of a durable and reliable construction.

Other aspects of the present invention will become apparent, from time to time, throughout the specification, as hereinafter related.

In this respect, before explaining at least one embodiment of the invention in detail, it is to be understood that the invention is not limited in its application to the details of construction and to the arrangements of the components set forth in the following description or illustrated in the drawings. The invention is capable of other embodiments, and of being practiced and carried out in various ways. Also, it is to be understood that the phraseology and terminology employed herein are for the purpose of description, and should not be regarded as limiting. These, together with other objectives of the invention and the various features of novelty that characterize the invention, are pointed out with particularity in the disclosure. For a better understanding of the invention, its operating advantages, and the specific objectives attained by its uses, reference should be had to the accompanying drawings and descriptive matter, in which there are illustrated preferred embodiments of the invention.

### BRIEF DESCRIPTION OF THE DRAWINGS

To further clarify various aspects of some example embodiments of the present invention, a more particular description of the invention will be rendered by reference to specific embodiments thereof, which are illustrated in the appended drawing. It is appreciated that the drawing depicts only illustrated embodiments of the invention, and is, therefore, not to be considered limiting of its scope. The invention will be described and explained with additional specificity and detail through the use of the accompanying drawing, in which:
**FIG.1** is a sketch of the polymer clay extruder in a circle style.
**FIG.2** is a sketch of the polymer clay extruder in a square style.
**FIG.3** is a sketch of the polymer clay extruder in a square style..
FIG.4 is a drawing showing the different polymer extruder in various sizes and shapes in accordance with Tables I, II and III.

### DETAILED DESCRIPTION OF THE INVENTION

Various aspects of the illustrative embodiments will be described using the terms commonly employed by those skilled in the art to convey the substance of their work to others skilled in the art. However, it will be apparent to those skilled in the art that the present invention may be practiced with only some of the described aspects. For purposes of explanation, specific numbers, materials, and configurations are set forth in order to provide a thorough understanding of the illustrative embodiments. However, it will be apparent to one skilled in the art that the present invention may be practiced without the specific details. In other instances, well-known features are omitted or simplified in order to not obscure the illustrative embodiments.

In some preferred embodiments, the present invention provides a useful polymer clay "cane" extruder tool 1 that specifically designed for polymer clay artists to cut uniform slices of their polymer canes. These polymer canes can be combined to create "sheets" to make jewelry and/or other arts and crafts related projects. This tool gives uniform shape and size to each slice of polymer cane, when compressed and extruded, which holds its shape and aids in cutting uniform slices of the clay "canes" with little to no distortion. The purpose of the invention is to provide a comfortable usage of the tool without any external pressure or excessive force.

The polymer clay "cane" extruder 1 in cylinder style is comprised of a solid rod 17 and a clear tube18 which are represented together in assembly. The cylindrical shaped solid rod17 is 6 inches in length with etched measuring lines in the 4 inch area. The clear hollow tube 18 is made up of acrylic. It measures 4 inches in length and 1/8 inches in wall thickness. Shown below are Tables I, II and III illustrating the different dimensions of the polymer clay "cane" extruder that embodies the principles and concepts of the present invention is described herein.

**TABLE I**

| ITEM# | ITEM DESCRIPTION | OD | ID | ITEM# | ITEM DESCRIPTION | OD | ID |
|---|---|---|---|---|---|---|---|
| 101 A | 0.1 TUBE 1/8, wall thickness, tol=+/-.030 | 1.25 | 1 | 101B | Rod, tol = +.005 | 0.937 | - |
| 102 A | 0.75 TUBE 1/8, wall thickness, tol=+/-.030 | 1 | 0.75 | 101B | Rod, tol = +.005 | 0.6875 | - |
| 103 A | 0.50 TUBE 1/8, wall thickness, tol=+/-.030 | 0.75 | 0.5 | 101B | Rod, tol = +.005 | 0.4375 | - |
| 104 A | 0.375 TUBE 1/8, wall thickness, tol=+/-.030 | 0.625 | 0.375 | 101B | Rod, tol = +.005 | 0.25 | - |

| | | OUTSIDE | INSIDE | | | | |
|---|---|---|---|---|---|---|---|
| 105 A | 1.5 SQ TUBE 1/8, wall | 1.75 | 1.5 | 101B | solid, tol = | | |
| | thickness, tol=+/-.030 | | | | +.005 | | |
| 106 A | 0.87 SQ TUBE 1/8, wall thickness, tol=+/-.031 | 1.125 | 0.875 | 101B | solid, tol = +.005 | | |
| 107 A | 0.62 SQ TUBE 1/8, wall thickness, tol=+/-.031 | 0.875 | 0.625 | 101B | solid, tol = +.005 | | |
| 108 A | 0.37 SQ TUBE 1/8, wall thickness, tol=+/-.030 | 0.625 | 0.375 | 101B | solid, tol = +.005 | | |
| | | | | | | | |
| 109 A | 1.0 Triangula 1/8, wall thickness, tol=+/-.030 | 1.25 | 1 | 101B | Solid triangle, tol = +.005 | | |

**TABLE II**

| ITEM# | ITEM DESCRIPTION | OD | ID | ITEM# | ITEM DESCRIPTION | OD | ID |
|---|---|---|---|---|---|---|---|
| 109 A | 1.0 Triangula 1/8, wall thickness, tol=+/-.030 | 1.25 | 1 | 101B | Solid triangle, tol = +.005 | | |

**TABLE III**

| ASSEMBLY # | DETAILED ITEMS #S |
|---|---|
| 101C= | 101A+101 |
| 102C= | 102 A+102B |
| 103C= | 103 A+103B |
| 104C= | 104 A+104B |
| 105C= | 105 A+105B |
| 106C= | 106 A+106B |
| 107C= | 107 A+107B |
| 108C= | 108 A+108B |
| 109C= | 109 A+109B |

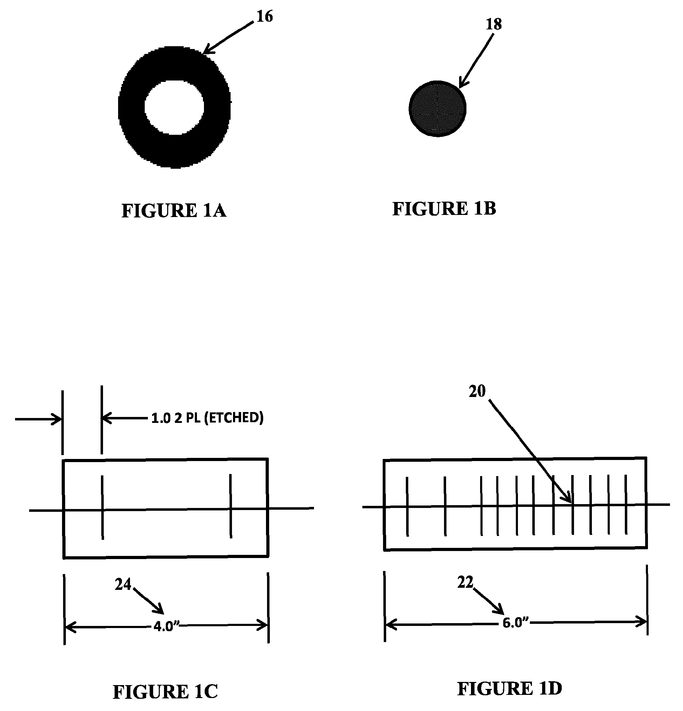

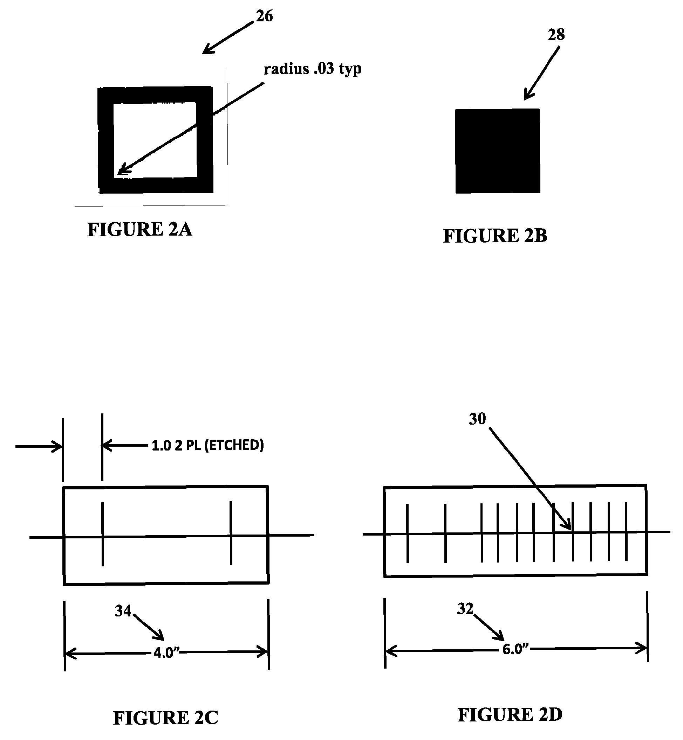

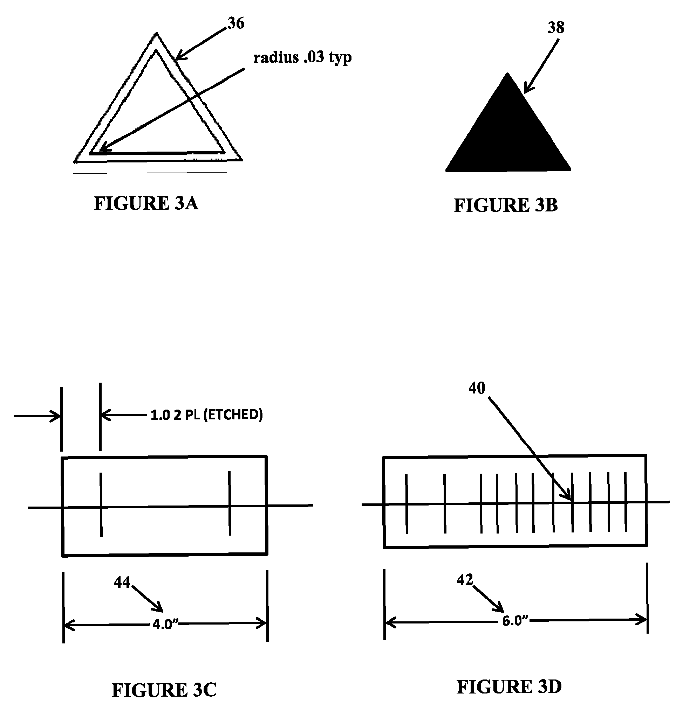

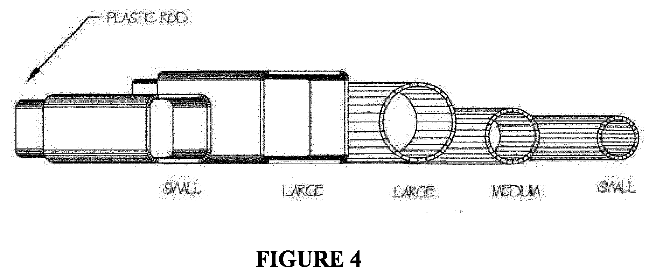

Referring to the drawings, **Fig.1A-D** of the drawing illustrates the polymer clay "cane" extruder **1** with a circular shape head **2** having dimensions illustrated in the tables, to provide circular canes **3,** wherein the assembly is a solid rod **17** and clear tube **18.** In another embodiment of the present invention, **Fig.2A-D** illustrate the polymer clay "cane" extruder **1** with a square shape head 7 to provide square canes **8,** having dimensions illustrated in the tables, wherein the assembly is a solid rod **17** and clear tube **18.** In **Fig.3A-D** of the drawings of the invention illustrates a further embodiment that discloses a triangular shaped head **12** of the polymer clay "cane" extruder 1, having dimensions shown in Table I and is made from clear, except that the tool disclosed herein is triangular in shape, which would provide triangular canes**13.** In accordance to Fig.4 of the drawings of the invention shows the different polymer extruder in various sizes and shapes in accordance with Tables I, II and III.

The invention also discloses the process for making polymer "canes", which is elaborated as:
Preparation: First of all, the process begins by reducing the cane to fit easily in the polymer cane extruder 1. The cane should be pliable from resizing to provide the best result. Once the preparation of polymer clay is done, the process is further preceded by the cutting of canes.
Instruction for cutting polymer clay "canes":
   1. Mark the cane evenly with the cut marks. (This step is optional).
   2. Spray the inside of the cane extruder with a water mist.
   3. Insert the reduced polymer clay into cane extruder 1. The plastic rod 17 is used to tap the cane evenly so that it fits tightly in the extruder 1. The same rod is also used to push (extrude) the clay out of the cane extruder to the desired thickness.
   4.With the end of the cane extruder, a sharp blade is used to cut the polymer clay in to cane slices. Furthermore, it must be compressed often so that the clay holds its shape in the extruder 1, rotating the tool between the cuts.

Clean Up: Remove the unused cane to prevent it from sticking inside of the extruder 1. Clean the tool with a baby wipe or soft cloth with rubbing alcohol. The polymer clay "cane" extruder 1 is water resistant and cleans up with mild soap and water without causing any damage to the product.

Another embodiment discloses the usage of polymer clay canes in jewelry articles, such as beads, pendants, bracelets, and neckpieces. With some particular treatments, polymer-clay composites can also be used to make items with similar appearance of granite, jade, amber, coral, turquoise, and ivory. The polymer-clay composite is also useful in craftsmanship for the manufacturing of wooden boxes, picture frames, mirrors, tableware, small sculptures, and buttons.

With respect to the above description, it is to be understood that the optimum dimensional relationships for the parts of the invention, to include variations in size, materials, shape, form, function and manner of operation, assembly, and use, are deemed readily apparent and obvious to one skilled in the art, and that all equivalent relationships to those illustrated in the drawings and described in the specification are intended to be encompassed by the present invention.

Therefore, the foregoing is considered as illustrative only of the principles of the invention. Furthermore, since numerous modifications and changes will readily occur to those skilled in the art, it is not desired to limit the invention to the exact construction and operation shown and described. Accordingly, all suitable modifications and equivalents may be resorted to, falling within the scope of the invention.

## Claims

1. A polymer clay "cane" extruder tool for cutting polymer clay slices of various uniform and consistent shapes, which comprises:
a) a solid rod, and
b) a clear hollow tube.

2. A polymer clay "cane" extruder of claim 1, wherein said tool is made of clear acrylic.

3. A polymer clay "cane" extruder of claim 1, wherein said tool includes cylindrical, square, and triangular shapes.

4. A polymer clay "cane" extruder of claim 1, wherein solid rod is 6 inches in length with etched measuring lines in the 4 inch area.

5. A polymer clay "cane" extruder of claim 1, wherein said clear hollow tube is 4 inches in length and 1/8 inches thick.

6. A polymer clay "cane" extruder of claim 1, wherein said tool, when compressed and extruded, holds its shape and aids in cutting uniform slices of the clay "canes" with little to no distortion.

7. A polymer clay "cane" extruder of claim 1, wherein said tool is water resistant and requires mild soap and water for cleaning.

8. A polymer clay "cane" extruder of claim 1, wherein said tool does not require any excessive force for cutting canes.

9. A polymer clay "cane" extruder of claim 1, that is used for making jewelry articles, such as beads, pendants, bracelets, and neckpieces.

10. A polymer clay "cane" extruder of claim 1 is used for arts and crafts related projects.
